# EUROPEAN PATENT APPLICATION

(11) **EP 1 348 482 A2**
(43) Date of publication of application: **01.10.2003**
(21) Application number: 03006741.7
(22) Date of filing: 25.03.2003
(51) Int. Cl.: B01J 19/00

(54) **Modified solid carrier and DNA detection device**

(30) Priority: 25.03.2002 JP 2002084272
(71) Applicant: Fuji Photo Film Co., Ltd., Kanagawa-ken, 250-0123 (JP)
(72) Inventor: Shinoki, Hiroshi, Asaka-shi, Saitama, 351-8585 (JP); Nirasawa, Mitsuharu, Asaka-shi, Saitama, 351-8585 (JP); Sudo, Yukio, Asaka-shi, Saitama, 351-8585 (JP)
(74) Representative: Albrecht, Thomas, Dr.

(57) **Abstract**

A modified solid carrier composed of a solid carrier and a group of compounds having a vinylsulfonyl group which are fixed to the solid carrier with non-covalent bonding is favorably employed for preparing a device for detection of oligonucleotide or polynucleotide.

## Description

### FIELD OF THE INVENTION

This invention relates to a modified solid carrier composed of a solid carrier and a group of compounds having a vinylsulfonyl group favorably employable for preparing a device for detecting oligonucleotide or polynucleotide. The detection device is generally named DNA chip and is favorably employable for detecting, with high sensitivity, complementary nucleic acid fragments.

### BACKGROUND OF THE INVENTION

Detection of nucleic acid fragments is generally performed using a probe oligonucleotide which is complementary to the nucleic acid fragment to be detected, by way of hybridization. The probe oligonucleotide is generally fixed onto a solid carrier (e.g., solid substrate) to produce a so-called DNA chip. In the detection procedures, a nucleic acid fragment in a sample liquid is provided with a fluorescent label, a radioisotope label or an electrochemical label, and then the sample liquid is brought into contact with the probe oligonucleotide of the DNA chip. If the labelled nucleic acid fragment in the sample liquid is complementary to the probe oligonucleotide, the labelled nucleic acid fragment is combined with the probe oligonucleotide by hybridization. The labelled nucleic acid fragment fixed to the DNA chip by hybridization with the probe oligonucleotide is then detected by an appropriate detection method such as fluorometry, autoradiography or electrochemical reaction. The DNA chip is widely employed in the gene technology, for instance, for detecting a complementary nucleic acid fragment and sequencing a nucleic acid.

The DNA chip can be utilized to efficiently detect a large number of complementary nucleic acid fragments in a small amount of a sample liquid almost simultaneously.

In the case that the complementary nucleotide derivatives (which are synthesized using mRNA as mold) or PCR products (which are DNA fragments prepared by multiplying cDNA by PCR method), an aqueous solution of the prepared DNA fragment is spotted onto a solid carrier having a poly-cationic coat in a DNA chip-preparing device to fix the DNA fragment to the carrier via electrostatic bonding, and then blocking a free surface of the polycationic coat.

United States Patent 5,387,505 describes a method of separating a target DNA fragment by binding the target DNA fragments labelled with a biotin molecule with a substrate having avidin molecules.

United States Patent 5,094,962 discloses a detection tool for a ligand-receptor assay in which receptor molecules are bonded to a porous polymer particle having a reactive group.

EP 1 106 603 A2 discloses a reactive solid carrier favorably employable for manufacturing DNA chip which is composed of a solid carrier and a plurality of vinylsulfonyl groups each of which is fixed onto a surface of the solid carrier having active hydrogen-containing groups (such as amino groups) on the surface by covalent bonding via a linking group.

### SUMMARY OF THE INVENTION

The present inventors have studied the reactive solid carrier disclosed in EP 1 106 603 A2 and discovered that if the vinylsulfonyl-containing compound is brought into contact with a solid carrier having on its surface no active hydrogen-containing group such as amino group, the vinylsulfonyl-containing compound is fixed onto the surface of the solid carrier via non-covalent bonding. Nucleotide derivatives or their analogues such as DNA fragment can react with the vinylsulfonyl group of the compound which is non-covalently fixed onto the solid carrier, to give a DNA detection device, namely, DNA chip. Thus obtained DNA detection device shows a high sensitivity which is comparable to the sensitivity of the DNA detection device disclosed in EP 1 106 603 A2.

The inventors have further discovered that when the compound having a vinylsulfonyl group is brought into contact with a hydrophobic polymer film such as polyester film, a modified polymer film on which reactive vinylsulfonyl groups are fixed with non-covalent bonding is produced. The inventors have furthermore discovered that thus modified polymer film is favorably employed for manufacturing a DNA detection device having an increased number of sites of probe molecules because a solution containing probe molecules can be spotted onto the modified polymer film with a smaller spot size.

Accordingly, the present invention resides in a modified solid carrier comprising a solid carrier and a group of compounds having a vinylsulfonyl group, the group of compounds being fixed to the solid carrier with non-covalent bonding.

The vinylsulfonyl group is preferably represented by the following formula:

- SO₂ - CR¹ = CR²R³

in which each of R¹, R² and R³ independently is a hydrogen atom, an alkyl group having 1 to 6 carbon atoms, an aryl group having 6 to 20 carbon atoms, or an aralkyl group having 7 to 26 carbon atoms in which its alkyl group has 1 to 6 carbon atoms. It is preferred that each of R¹, R² and R³ is a hydrogen atom, that is, - CR¹ = CR²R³ is vinyl group (-CH=CH₂).

The modified solid carrier of the invention is preferably produced by a method which comprises bringing a group of compounds having a vinylsulfonyl group into contact with a solid carrier having no active hydrogen-containing group thereon so that no covalent bondings are produced between the compounds and the solid carrier.

The compound having a vinylsulfonyl group preferably has the following formula:

X¹ - SO₂ - L - SO₂ - X²

in which L represents a linking group, and each of X¹ and X² represents a group of -CR¹=CR²R³ wherein each of R¹, R² and R³ independently is a hydrogen atom, an alkyl group having 1 to 6 carbon atoms, an aryl group having 6 to 20 carbon atoms, or an aralkyl group having 7 to 26 carbon atoms in which its alkyl group has 1 to 6 carbon atoms.

The compound having a vinylsulfonyl group preferably is 1,2-bis(vinylsulfonylacetamide) ethane or 1,2-bis(vinylsulfonylacetamide)propane.

### DETAILED DESCRIPTION OF THE INVENTION

The solid carrier can be any of known materials which are described in prior art references as materials for serving as the solid carrier of DNA chips. Preferred are glass sheet and polymer material film. Examples of the polymer materials include cellulose derivatives (e.g., diacetylcellulose, triacetylcellulose, propionylcellulose, butanoylcellulose, and acetylpropionylcellulose), polyamides, polycarbonates, polyesters (e.g., polyethylene terephthalate, polyethylene-1,2-diphenoxyethane-4,4'-dicarboxylate, polybutylene terephthalate, polyethylene naphthalate), polycycloolefins (e.g., Zeonor and Zeonex, tradenames), polyallylate (e.g., U-polymer, tradename), polystyrene, polypropylene, polyethylene, polymethylpentene, polyether sulfone, and polyether amide. Preferred are polyethylene terephthalate and polyethylene naphthalate.

The polymer material film can be a continuous polymer film web.

The polymer material film can be previously treated by surface-active treatments such as corona discharge treatment, plasma discharge treatment, glow discharge treatment, laser treatment, ozone-oxidation treatment, surface-roughening treatment, chemical treatment, or flame treatment.

The solid carrier is brought into contact with a vinylsulfonyl group-containing compound such as a divinylsulfone compound in an aqueous medium, whereby the vinylsulfonyl group-containing compound is fixed onto the solid carrier with non-covalent bonding.

As is described hereinbefore, the vinylsulfonyl group preferably has the following formula:

- SO₂ - CR¹ = CR²R³

In the formula, each of R¹, R² and R³ independently is a hydrogen atom, an alkyl group having 1 to 6 carbon atoms such as methyl, ethyl, n-propyl, isopropyl, n-butyl, or n-hexyl, an aryl group having 6 to 20 carbon atoms such as phenyl or naphthyl, or an aralkyl group having 7 to 26 carbon atoms in which its alkyl group has 1 to 6 carbon atoms such as benzyl or phenethyl. Preferably, each of R¹, R² and R³ is a hydrogen atom.

It is preferred that the compound having a vinylsulfonyl group is a divinylsulfone compound having the following formula:

X¹ - SO₂ - L² - SO₂ - X²

in which L² represents a linking group, and each of X¹ and X² represents a group of -CR¹=CR²R³ wherein each of R¹, R² and R³ independently is a hydrogen atom, an alkyl group having 1 to 6 carbon atoms, an aryl group having 6 to 20 carbon atoms, or an aralkyl group having 7 to 26 carbon atoms in which its alkyl group has 1 to 6 carbon atoms; Y represents a halogen atom.

Preferred are 1,2-bis(vinylsulfonylamide)ethane and 1,2 -bis (vinylsulfonylamide)propane.

The contact of the divinylsulfone compound to the solid carrier can be performed by known coating methods utilizing various coating apparatuses, such as, kiss roll coater, squeeze roll coater, direct gravure roll coater, off-set gravure roll coater, off-set plane roll coater, two roll reverse coater, three roll reverse coater, one roll reverse coater, direct plane roll coater, air knife coater, or dip roll coater. The dip roll coater is preferably employed. In more detail, a solution of divinyl sulfone compound is brought into contact with the solid carrier surface utilizing a coating method and then the coated carrier is dried.

The vinylsulfonyl groups attached to the surface of the solid carrier are resistant to hydrolysis and highly reactive to probe compounds (such as polynucleotide, oligonucleotide, and peptide nucleic acid) having activehydrogen containing groups such as amino groups (-NH₂). Accordingly, the modified solid carrier of the invention can be stored for a certain period of time maintaining its reactivity after it is manufactured.

The probe compounds to be fixed to the modified solid carrier can be oligonucleotides, polynucleotides, or peptide-nucleotides. The probe compounds may be DNA fragments. The probe compounds may be polynucleotide such as cDNA, a portion of cDNA, or EST. The polynucleotide is favorably employed for studying gene expression. Otherwise, the probe compounds to be fixed onto the modified solid carrier may be oligonucleotides, which are favorably employed for studying variations and polymorphism of gene. The oligonucleotide to be fixed onto the solid carrier preferably is one of 3 to 50-mers, more preferably 10 to 25 mers. The oligonucleotide and polynucleotide can have one or more substituent groups or crosslinking groups, provided that the attachment of these groups does not impart adverse influence to the function of the oligonucleotide and polynucleotide. For instance, LNA (locked nucleic acid) which is described in J. Am. Chem. Soc., 1998, 120, 13252-13253, can be employed.

The probe compounds to be employed in the invention should have at its one terminal or its vicinity a reactive group which can react with the vinylsulfonyl group or its reactive precursor. The reactive group can be a group of amino, carboxyl, acyl, or carbamoyl. Most preferred is an amino group.

The reactive group can be attached to the nucleotide derivative or its analogue via a linking group. The linking group preferably is an alkylene group or an N-alkylamino-alkylene group. Preferred are a hexylene group and an N-methylamino-hexylene group.

The probe compounds to be fixed onto the solid carrier are dissolved or dispersed in an aqueous medium. Generally, the aqueous solution is once placed on a plastic plate having 96 or 384 wells, and then spotted onto the modified solid carrier using a spotting means.

In order to keep the spotted aqueous solution from evaporating, it is preferred to add a high boiling-point compound to the aqueous solution containing probe compounds. The high boiling-point compound should be soluble in an aqueous medium, should not disturb hybridization procedure, and preferably has an appropriate viscosity. Examples of the high boiling-point compounds include glycerol, ethylene glycol, dimethylsulfoxide, and a hydrophilic polymer having a low molecular weight (typically, in the range of 10³ to 10⁶) such as polyacrylamide, polyethylene glycol, or poly(sodium acrylate). The high boiling-point compound preferably is glycerol or ethylene glycol. The high boiling-point compound is preferably incorporated into an aqueous probe compound solution in an amount of 0.1 to 2 vol.%, particularly 0.5 to 1 vol.%. Otherwise, the spotted aqueous solution is preferably kept under the conditions of a high humidity (such as 90%RH or more) and an ordinary temperature (25 to 50°C).

The aqueous probe compound solution is spotted onto the solid carrier under the condition that each drop of the solution generally has a volume of 100 pL to 1 µL, preferably 1 to 100 nL. The probe compounds preferably spotted onto the modified solid carrier are in an amount (number) of 10² to 10⁵/cm². In terms of mol., 1 to 10⁻¹⁵ moles are spotted. In terms of weight, several ng or less of probe compounds are spotted. The spotting of the aqueous solution is made onto the modified solid carrier to form several dots having almost the same shape and size. Several dots are formed separately from each other with a distance of 1.5 mm or less, preferably 100 to 300 µm. One dot preferably has a diameter of 50 to 300 µm.

After the aqueous solution is spotted on the solid carrier, the spotted solution is preferably incubated, by keeping the solid carrier for a certain period at room temperature or under warming, so as to fix the spotted probe compounds onto the solid carrier. In the course of incubation, UV irradiation or surface treatment using sodium borohydride or a Shiff reagent may be applied. The UV irradiation under heating is preferably adopted. The free (namely, unfixed) probe compounds are washed out using an aqueous solution. Thus washed solid carrier is then dried to give a probe compound-fixed solid carrier (that is, DNA chip).

The present invention is further described by the following examples.

### [Example 1] - Manufacture of oligonucleotide-detection device and evaluation of performance for detecting target oligonucleotide

### (1) Preparation of polymer film to which vinylsulfonyl group-containing compounds are fixed with non-covalent bonding --- modified polymer film

A polyethylene terephthalate film (PET film, size: 25 mm x 76 mm, thickness: 188 µm) was placed for 120 minutes in a borate buffer solution containing 3 wt.% of 1,2-bis(vinylsulfonylacetamide)propane at 25°C. Thus treated PET film was taken out of the buffer solution and dried in an oven adjusted to 30°C to give the modified polymer film.

### (2) Manufacture of oligonucleotide-detection device

An oligonucleotide (3'-TCCTCCATGTCCGGGGAGGATCT-GACACTTCAAGGTCTAG-5', 40-mers) having amino group at 3'-terminal was dispersed in 1 µL of an aqueous solution containing a carbonate buffer (0.1 M, pH 9.3) at a concentration of 1 x 10⁻⁶ M. The oligonucleotide-containing buffer solution was then spotted onto the modified polymer film obtained in (1) above, and this was kept at 25°C, 90%RH for one hour. Thus treated film was washed successively twice with a mixture of aqueous 0.1 wt.% SDS (i.e., sodium dodecylsulfate) solution and aqueous 2xSSC solution (obtained by twice diluting standard sodium chloride-citrate buffer solution (SSC)), and once with the aqueous 0.2xSSC solution. Thus washed polymer film was placed in an aqueous 0.1 M glycine solution (pH 10) for 1.5 hours, washed with distilled water, and then dried at room temperature, to prepare the oligonucleotide detection device.

### (3) Detection of complimentary target oligonucleotides

A target oligonucleotide (CTAGTCTGTGAAGTTCCAGATC-5', 22-mers) having Cy5 (fluorescent label) at its 5'-terminal was dispersed in 20 µL of a hybridizing solution (mixture of 4 x SSC and 10 wt.% SDS). The resulting solution was spotted onto the detection device prepared 'in (2) above, and its spotted surface was covered with a covering glass. Thus covered chip was subjected to incubation at 60°C for 20 hours in a moisture chamber. The incubated film was washed successively with a mixture of 0.1 wt.% SDS and 2xSSC, a mixture of 0.1 wt.% SDS and 0.2xSSC, and an aqueous 0.2xSSC solution, centrifuged at 600 r.p.m. for 20 seconds, and dried at room temperature.

The fluorescence strength of thus treated detection device was measured using a fluorescence scanning apparatus (FLA8000, available from Fuji Photo Film Co., Ltd.). The fluorescence strength measured in the procedure is set forth in Table 1.

### [Comparison Example 1] - Manufacture of oligonucleotide-detection device and evaluation of its performance for detecting target oligonucleotide

In the manner described in the aforementioned EP 1 106 603 A2, 1,2-bis(vinylsulfonylacetamide)propane was brought into contact with a glass plate having amino groups on its surface (available from Matsunami Glass Works Co., Ltd.) to prepare a reactive glass plate to which 1,2-bis(vinylsulfonylacetamide)propanes were fixed with covalent bonding.

Thus prepared reactive glass plate was processed in the manner described in Example 1-(2) to give an oligonucleotide detection device.

The procedure for detecting complimentary target oligonucleotides was carried out in the manner described in Example 1-(3) to evaluate performance for detecting target oligonucleotide. The fluorescence strength measured in the procedure is set forth in Table 1.

**Table 1**

| Concentration of Target oligonucleotide in spotted solution (M) | Fluorescence strength measured in Com. Example 1 | Fluorescence strength measured in Example 1 |
|---|---|---|
| 5 x 10⁻⁶ | 170,000 | 186,000 |
| 1 x 10⁻⁵ | 383,000 | 384,000 |

### [Example 2] --- Comparison of spot size

In each of the detection devices manufactured in Example 1 and Comparison Example 1 was spotted each of three buffer solutions (a buffer solution, 50% glycerol-buffer solution, and 50% aqueous dimethylsulfoxide (DMSO) solution) containing Cy5-labelled oligonucleotide (concentration: 10 ng/µL) by means of a commercially available spotter (slit-pin type). The spotted solution was dried, and the spot size was measured using a fluorescence scanning apparatus (FLA8000). Further, a contact angle of each spot (spot of the buffer solution) on the detection device was measured. The results of the measurement are set forth in Table 2.

**Table 2**

| | Fluorescence strength measured in Com. Example 1 | Fluorescence strength measured in Example 1 |
|---|---|---|
| Contact angle (buffer solution) | 21° | 56° |
| Spot size | | |
| Buffer solution | 280 µm | 150 µm |
| 50% glycerol-buffer | 530 µm | 180 µm |
| 50% aqueous DMSO | > 1,000 µm | 210 µm |

## Claims

1. A modified solid carrier comprising a solid carrier and a group of compounds having a vinylsulfonyl group, the group of compounds being fixed to the solid carrier with non-covalent bonding.

2. The modified solid carrier of claim 1, wherein the vinylsulfonyl group is represented by the following formula:
- SO₂ - CR¹ = CR²R³
in which each of R¹, R² and R³ independently is a hydrogen atom, an alkyl group having 1 to 6 carbon atoms, an aryl group having 6 to 20 carbon atoms, or an aralkyl group having 7 to 26 carbon atoms in which its alkyl group has 1 to 6 carbon atoms.

3. The modified solid carrier of claim 2, wherein each of R¹, R² and R³ is a hydrogen atom.

4. The modified solid carrier of claim 1, wherein the solid carrier is a solid sheet.

5. The modified solid carrier of claim 4, wherein the solid sheet is a glass sheet or a polymer sheet.

6. The modified solid carrier of claim 1, wherein the compound having a vinylsulfonyl group is represented by the following formula:
X¹ - SO₂ - L - SO₂ - X²
in which L represents a linking group, and each of X¹ and X² represents a group of -CR¹=CR²R³ wherein each of R¹, R² and R³ independently is a hydrogen atom, an alkyl group having 1 to 6 carbon atoms, an aryl group having 6 to 20 carbon atoms, or an aralkyl group having 7 to 26 carbon atoms in which its alkyl group has 1 to 6 carbon atoms.

7. The modified solid carrier of claim 6, wherein the compound having a vinylsulfonyl group is 1,2-bis-(vinylsulfonylacetamide) ethane or 1,2-bis(vinylsulfonylacetamide)propane.

8. A method for producing the modified solid carrier of claim 1, which comprises bringing a group of compounds having a vinylsulfonyl group into contact with a solid carrier having no active hydrogen-containing groups thereon.

9. A device for detection of oligonucleotide or polynucleotide, which is prepared by fixing probe molecules selected from the group consisting of oligonucleotides, polynucleotides and peptide nucleic acids to the modified solid carrier of claim 1 via covalent bondings formed between the vinylsulfonyl groups of the modified solid carrier and the probe molecules.
